Europäisches Patentamt

European Patent Office

Office européen des brevets

(19)

(11) **EP 1 677 437 A2**

(12) **EUROPEAN PATENT APPLICATION**

(43) Date of publication:
**05.07.2006 Bulletin 2006/27**

(51) Int Cl.:
**$H04B\ 7/08$** $^{(2006.01)}$ **$H04L\ 1/06$** $^{(2006.01)}$

(21) Application number: **05028739.0**

(22) Date of filing: **30.12.2005**

(84) Designated Contracting States:
**AT BE BG CH CY CZ DE DK EE ES FI FR GB GR HU IE IS IT LI LT LU LV MC NL PL PT RO SE SI SK TR**
Designated Extension States:
**AL BA HR MK YU**

(30) Priority: **31.12.2004 KR 2004118322**

(71) Applicants:
- **Samsung Electronics Co., Ltd.**
  **Suwon-si, Gyeonggi-Do (KR)**
- **Korea Advanced Institute of Science and Technology**
  **(KAIST)**
  **Yusong-gu**
  **Daejon**
  **305-701 (KR)**

(72) Inventors:
- **Kwun, Jong-Hyung**
  **Samsung Electronics Co., Ltd.**
  **Suwon-si**
  **Gyeonggi-do (KR)**
- **Hwang, Chan-Soo**
  **Samsung Electronics Co., Ltd.**
  **Suwon-si**
  **Gyeonggi-do (KR)**
- **Lee, Kyung-Chun**
  **Gangneung-si**
  **Gangwon-do (KR)**
- **Chun, Joo-Hwan**
  **Daejon (KR)**

(74) Representative: **Grünecker, Kinkeldey, Stockmair & Schwanhäusser**
**Anwaltssozietät**
**Maximilianstrasse 58**
**80538 München (DE)**

(54) **Apparatus and method for detecting a signal in a multiple-input multiple-output mobile communication system**

(57)    A signal detection method and apparatus in a receiver in a MIMO mobile communication system. The receiver orders symbol combinations transmittable from a transmitter in an ascending order of the difference between the symbol combinations and transmit symbols produced by eliminating inter-symbol interference from a received signal, initializes a symbol combination with the minimum difference to an ML solution, calculates the distance between a first symbol combination and the transmit symbols and the cost of a second symbol combination, detects a symbol combination having a distance to the transmit symbols equal to the distance between the first symbol combination and the transmit symbols, and having a minimum distance, and decides the first symbol combination as the ML solution if the minimum distance exceeds the distance between the first symbol combination and the transmit symbols.

FIG.5

**Description**

The present invention relates generally to a signal detecting apparatus and method in a mobile communication system, and in particular, to a signal detecting apparatus and method in a Multiple-Input Multiple-Output (MIMO) mobile communication system.

The basic issue in communications is how efficiently and reliably data can be transmitted on channels. Along with the demand for a high-speed communication system capable of processing and transmitting video and wireless data beyond the traditional voice service, it is significant to increase system efficiency using an appropriate channel coding scheme in future-generation multimedia mobile communication systems currently under development.

Generally, in the wireless channel environment of a mobile communication system, unlike that of a wired channel environment, a transmission signal inevitably experiences loss due to several factors such as multipath interference, shadowing, wave attenuation, time-variant noise, and fading. The resulting information loss causes a severe distortion to the actual transmission signal, in turn, degrading the whole system performance. In order to reduce the information loss, many error control techniques are usually adopted according to the characteristics of channels in order to increase system reliability. For example, a basic error correction technique is to use an error correction code.

Additionally, to eliminate the instability of communications caused by fading, diversity techniques are often used. The diversity techniques are classified into time diversity, frequency diversity, and antenna diversity, i.e., space diversity.

The antenna diversity uses multiple antennas. This diversity scheme is further branched into receive (Rx) antenna diversity using a plurality of Rx antennas, transmit (Tx) antenna diversity using a plurality of Tx antennas, and MIMO using a plurality of Tx antennas and a plurality of Rx antennas.

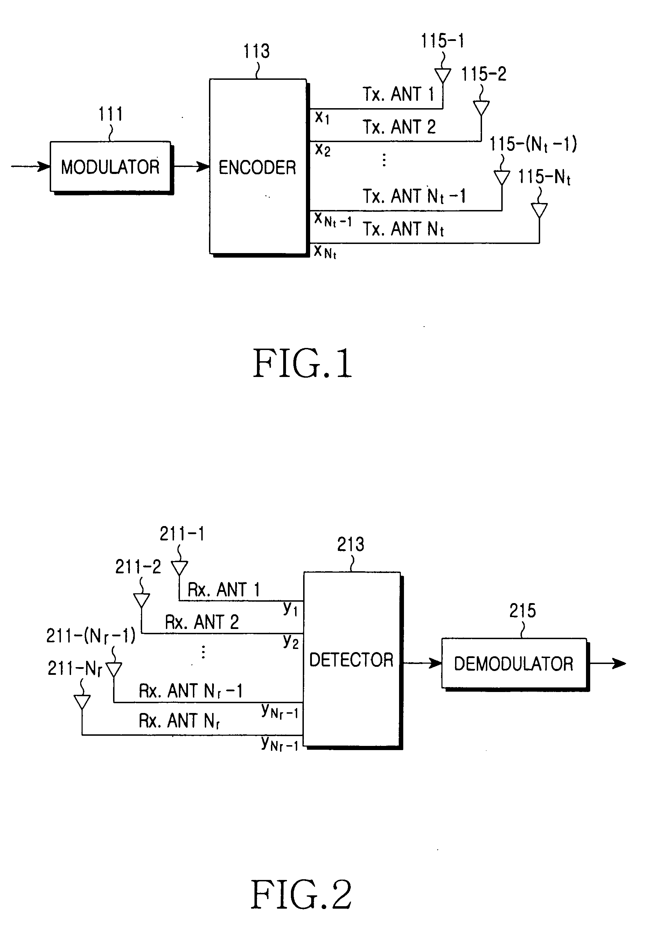

FIG 1 schematically illustrates a transmitter in a MIMO mobile communication system. Referring to FIG 1, the transmitter includes a modulator 111, an encoder 113, and a plurality of Tx antennas, that is, first to $N_t^{th}$ Tx antennas 115-1 to 115-$N_t$ (Tx. ANT 1 to Tx. ANT $N_t$). Upon input of information data bits, the modulator 111 modulates the information data bits in a predetermined modulation scheme. The modulation scheme is one of Binary Phase Shift Keying (BPSK), Quadrature Phase Shift Keying (QPSK), Quadrature Amplitude Modulation (QAM), Pulse Amplitude Modulation (PAM), and Phase Shift Keying (PSK).

The encoder 113 encodes the serial modulation symbols received from the modulator 111 in a predetermined coding scheme and provides the code symbols to the first to $N_t^{th}$ Tx antennas 115-1 to 115-$N_t$. The coding scheme converts the serial modulation symbols to as many parallel symbols as the number of Tx antennas 115-1 to 115-$N_t$. A transmission vector with the signals transmitted through the $N_t$ Tx antennas is assumed to be $x_c$, as expressed in Equation (1).

$$\mathbf{x_c} = [\mathbf{x}_1, \mathbf{x}_2, \ldots, \mathbf{x}_{N_t}]^T \qquad\qquad \ldots\ldots (1)$$

FIG 2 schematically illustrates a receiver in the MIMO mobile communication system. Referring to FIG 2, the receiver includes a plurality of, for example, $N_r$ Rx antennas 211-1 to 211-$N_r$ (Rx. ANT 1 to Rx ANT $N_r$), a detector 213, and a demodulator 215. While it is assumed herein that the number of the Rx antennas is different from that of the Tx antennas in the transmitter illustrated in FIG 1, they could also be equal.

Signals transmitted from the transmitter through the $N_t$ Tx antennas are received at the first to $N_r^{th}$ Rx antennas 211-1 to 211-$N_r$. A received vector with the received signals is assumed to be $y_c$, as expressed in Equation (2).

$$\mathbf{y_c} = [\mathbf{y}_1, \mathbf{y}_2, \ldots, \mathbf{y}_{N_r}]^T$$

$$\ldots\ldots (2)$$

The received vector $y_c$ can be expressed as shown in Equation (3):

$$\mathbf{y_c} = \mathbf{H_c}\mathbf{x_c} + \mathbf{n_c}$$

$$\ldots\ldots(3)$$

where $\mathbf{H_c}$ denotes a channel response vector with the channel responses of the first to $N_r{}^{th}$ Rx antennas 211-1 to 211-$N_r$ and $\mathbf{n_c}$ denotes a noise vector with noise signal received at the first to $N_r{}^{th}$ Rx antennas 211-1 to 211- $N_r$. $\mathbf{H_c}$ can be expressed as an $N_t$x$N_r$ matrix and a flat fading channel is assumed between the transmitter and the receiver.

The transmission vector $X_c$, the received vector $y_c$, and the channel response vector $\mathbf{H_c}$ are complex values. For notational simplicity, $\mathbf{x_c}$, $\mathbf{y_c}$, $\mathbf{n_c}$ and $\mathbf{H_c}$ are represented as real values, satisfying Equation (4).

$$\mathbf{y} = \mathbf{Hx} + \mathbf{n}$$

$$\ldots\ldots(4)$$

In Equation (4), $\mathbf{y} = \begin{bmatrix} \mathrm{Re}\{\mathbf{y_c}\} \\ \mathrm{Im}\{\mathbf{y_c}\} \end{bmatrix}$ , $\mathbf{x} = \begin{bmatrix} \mathrm{Re}\{\mathbf{x_c}\} \\ \mathrm{Im}\{\mathbf{x_c}\} \end{bmatrix}$ $\mathbf{n} = \begin{bmatrix} \mathrm{Re}\{\mathbf{n_c}\} \\ \mathrm{Im}\{\mathbf{n_c}\} \end{bmatrix}$ , and

$$\mathbf{H} = \begin{bmatrix} \mathrm{Re}\{\mathbf{H_c}\} & -\mathrm{Im}\{\mathbf{H_c}\} \\ \mathrm{Im}\{\mathbf{H_c}\} & \mathrm{Re}\{\mathbf{H_c}\} \end{bmatrix}.$$

The detector 213 detects the transmitted signals from the signals received at the first to $N_r{}^{th}$ Rx antennas 211-1 to 211- $N_r$, that is, the received vector $y_c$. The demodulator 215 demodulates the detected signals in a demodulation scheme corresponding to the modulation scheme used in the modulator 111 of the transmitter, thereby recovering the original information data bits.

Major sub-optimal algorithms of detecting transmit symbols from symbols received simultaneously in the MIMO communication system include the Babai point algorithm and the Ordered Successive Interference Cancellation (OSIC) algorithm.

The Babai point algorithm eliminates inter-symbol interference by multiplying a received signal y by the pseudo inverse matrix $\mathbf{H}^+$ of a channel response matrix $\mathbf{H}$, as shown in Equation (5).

$$\hat{\mathbf{x}} = \mathbf{H}^+\mathbf{y}$$

$$\ldots\ldots(5)$$

The signal is detected by searching for an integer point nearest to the transmitted signal $\hat{\mathbf{x}}$ free of the inter-symbol interference. The signal $\hat{\mathbf{x}}$ is a Babai point.

The Babai point algorithm advantageously enables signal detection with a minimum computation complexity because it requires only one matrix multiplication, that is, multiplication of the received signal y by the pseudo inverse matrix $\mathbf{H}^+$ of the channel response matrix $\mathbf{H}$. However, the Babai point algorithm experiences a high detection error rate relative to other sub-optimal detection algorithms.

In the OSIC algorithm, the receiver sequentially detects the symbols of a received signal and eliminates the signal component of each symbol from the received signal. The symbol detection is performed in an ascending order of minimum detection error rate. Because sequential elimination of a symbol with a minimum detection error rate from a received signal results in a relatively high degree of freedom compared to interference nulling, the OSIC algorithm has lower detection error rate than the Babai point algorithm. Compared to the Maximum Likelihood (ML) algorithm, however, the OSIC algorithm has relatively high detection error rate and its performance is drastically degraded especially as the number of Rx antennas at the receiver decreases.

The ML algorithm is optimal in detecting simultaneously received symbols in the MIMO mobile communication system.

In the ML algorithm, a symbol combination that maximizes an ML function is detected using Equation (6):

$$\mathbf{X}_{ML} = \min_{x \in Z^{2N_t}} \|\mathbf{Hx} - \mathbf{y}\|,$$

$$. . . . . (6)$$

where $\|\cdot\|$ denotes the Frobenius norm and $\|\mathbf{Hx\text{-}y}\|$ denotes the cost of each symbol combination (hereinafter referred to cost). Detection of an ML solution using the ML algorithm is known to be NP-hard. The volume of computation required for detecting the ML solution increases exponentially in proportion to the number ofTx antennas.

Despite the advantage of optimal symbol detection in the MIMO mobile communication system, the ML algorithm has the distinctive shortcoming of very high computation complexity. In this context, studies have been actively made on techniques for detecting an ML solution, as done in the ML algorithm, with low computation complexity, relative to the ML algorithm. The key algorithm among them is the sphere decoding algorithm.

The sphere decoding algorithm was designed to reduce the average computation volume of the ML algorithm. The principle of this algorithm is to draw a sphere having symbol combinations (hereinafter referred to lattice points) with the same cost in a space with lattice points and compare the costs of the lattice points lying within the sphere.

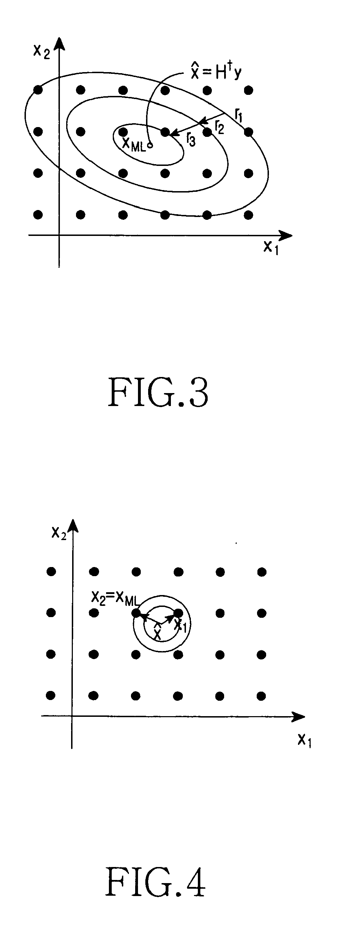

FIG 3 illustrates an ordinary sphere decoding algorithm. Referring to FIG 3, the sphere decoding algorithm searches for an ML solution by reducing the radius of a sphere with lattice points. The radius is the maximum cost that the lattice points within the sphere may have. Therefore, as the radius decreases, the number of lattice points inside the sphere also decreases. Continuous reduction of the radius finally leads to a sphere with a very small number of lattice points and the lattice point with the minimum cost among them is selected as the ML solution. As described above, the sphere decoding algorithm performs ML detection with low computation volume. Thus, it has low computation complexity compared to the ML algorithm.

The sphere decoding algorithm first generates a sphere with a maximum radius and successively reduces the radius of the sphere, to thereby detect an ML solution. However, the ML solution generally resides close to the Babai point in the mobile communication system. Therefore, because a search starts with lattice points relatively distant from the Babai point and then proceeds to lattice points relatively near to the Babai point, the sphere decoding algorithm is inefficient in that the computation volume is increased for searching for the ML solution.

Although the computation volume of the sphere decoding algorithm is low relative to the ML decoding, it is still tens of times larger than that of the Vertical-Bell Labs Layered Space Time (V-BLAST) algorithm. Consequently, the sphere decoding algorithm is difficult to implement in the actual mobile communication system.

Accordingly, a need exists for a novel detection algorithm that has near-ML detection performance and minimized complexity.

Accordingly, the present invention is to substantially solve at least the above problems and/or disadvantages and to provide at least the advantages below.

The object of the present invention is to provide an apparatus and method for detecting a signal with minimum computation volume in a MIMO mobile communication system.

This object is solved by the subject matter of the independent claims.

Preferred embodiments are defined in the dependent claims.

An aspect of the present invention is to provide an apparatus and method for detecting a signal using sphere decoding in which detection starts with lattice points near to a Babai point in a MIMO mobile communication system.

A further aspect of the present invention is to provide an apparatus and method for detecting a signal using V-BLAST-based sphere decoding in a MIMO mobile communication system.

The above is achieved by providing a signal detection method and apparatus in a receiver in a MIMO mobile communication system.

According to one aspect of the present invention, in a signal detection apparatus in a receiver in a MIMO mobile communication system, a detector orders symbol combinations transmittable from a transmitter in the MIMO mobile communication system in an ascending order of the difference between each of the symbol combinations and transmit symbols produced by eliminating inter-symbol interference from a received signal, initializes a symbol combination with the minimum difference to an ML solution, calculates the distance between an arbitrary first symbol combination and the transmit symbols, and the cost of an arbitrary second symbol combination, detects a symbol combination having a distance to the transmit symbols equal to the distance between the first symbol combination and the transmit symbols, and having a minimum distance, and decides the first symbol combination as the ML solution if the minimum distance exceeds the distance between the first symbol combination and the transmit symbols. A demodulator demodulates the ML solution in a demodulation method corresponding to a modulation scheme used in the transmitter.

According to another aspect of the present invention, in a signal detection apparatus in a receiver in a MIMO mobile communication system, a detector initially detects a received signal using an MDDF method and detects a channel response matrix produced by the initial detection using the MDDF method, using a V-VLAST method. The detector then updates a sphere radius and a parameter considering symbol combinations transmittable from a transmitter in the MIMO mobile communication system, and decides, if one symbol combination lies within the sphere radius after the update, the one symbol combination as a symbol combination transmitted by the transmitter. A demodulator demodulates the decided symbol combination in a demodulation method corresponding to a modulation scheme used in the transmitter.

According to a further aspect of the present invention, in a signal detection method in a receiver in a MIMO mobile communication system, symbol combinations transmittable from a transmitter in the MIMO mobile communication system are ordered in an ascending order of the difference between each of the symbol combinations and transmit symbols produced by eliminating inter-symbol interference from a received signal. A symbol combination with the minimum difference is initialized to an ML solution. The distance between an arbitrary first symbol combination and the transmit symbols, and the cost of an arbitrary second symbol combination are calculated. A symbol combination having a distance to the transmit symbols equal to the distance between the first symbol combination and the transmit symbols, and having a minimum distance is detected and the first symbol is decided combination as the ML solution, if the minimum distance exceeds the distance between the first symbol combination and the transmit symbols.

According to still another aspect of the present invention, in a signal detection method in a receiver in a MIMO mobile communication system, a received signal is initially detected using an MDDF method. A channel response matrix produced by the initial detection using the MDDF method is detected using a V-VLAST method. A sphere radius and a parameter are updated considering symbol combinations transmittable from a transmitter in the MIMO mobile communication system. If one symbol combination lies within the sphere radius after the update, the one symbol combination is decided as a symbol combination transmitted by the transmitter.

The present invention will become more apparent from the following detailed description when taken in conjunction with the accompanying drawings in which:

FIG 1 schematically illustrates a transmitter in a MIMO mobile communication system;
FIG 2 schematically illustrates a receiver in the MIMO mobile communication system;
FIG 3 illustrates an ordinary sphere decoding algorithm;
FIG 4 illustrates signal detection according to an embodiment of the present invention;
FIG 5 is a flowchart illustrating a signal detection operation according to an embodiment of the present invention;
FIG 6 illustrates positions of lattice points and $r_{min}$ for k=1 in the diagram of FIG 4;
FIG 7 illustrates a calculation of a distance between a lattice point x and a Babai point $\hat{x}$;
FIG 8 illustrates a calculation of a distance between a lattice point x and a Babai point $\hat{x}$ by modeling based on a shortest path problem;
FIG 9 is a graph comparing signal detection according to an embodiment of the present invention with an ordinary sphere decoding in terms of the number of real multiplications with respect to the 2-norm condition number of a channel response matrix **H** when the channel response matrix **H** is a 6x4 matrix and the elements of the lattice point **x** are generated in 16QAM;
FIG 10 is a graph comparing signal detection according to an embodiment of the present invention with an ordinary sphere decoding in terms of the number of real additions with respect to the 2-norm condition number of the channel response matrix **H** when the channel response matrix **H** is a 6x4 matrix and the elements of the lattice point **x** are generated in 16QAM;
FIG 11 is a graph illustrating cumulative probability distribution of a 6x4 channel response matrix **H** in signal detection according to an embodiment of the present invention;
FIG 12 is a graph comparing signal detection according to an embodiment of the present invention with the ordinary sphere decoding in terms of the number of real multiplications with respect to the 2-norm condition number of the channel response matrix H when the channel response matrix **H** is a 6x4 matrix, the elements of the lattice point **x** are generated in 16QAM, and a transformation matrix **T_n** is used;
FIG 13 is a graph comparing the signal detection according to the embodiment of the present invention with the ordinary sphere decoding in terms of the number of real multiplications with respect to the 2-norm condition number of the channel response matrix **H** when the channel response matrix **H** is a 10x6 matrix and the elements of the lattice point x are generated in 16QAM;
FIG 14 is a graph illustrating cumulative probability distribution of a 10x6 channel response matrix H in signal detection according to an embodiment of the present invention;

FIG 15 illustrates a tree structure describing an enumeration according to an embodiment of the present invention;

FIG 16 illustrates a tree structure and a subtree structure according to an embodiment of the present invention;

FIG 17 is a graph comparing the signal detection according to an embodiment of the present invention with the ordinary sphere decoding in terms of average computation volume in the case of a 4x4 MIMO channel and QPSK; and

FIG 18 is a graph comparing the signal detection according to an embodiment of the present invention with the ordinary sphere decoding in terms of average computation volume in the case of a 6x6 MIMO channel and QPSK.

Preferred embodiments of the present invention will be described herein below with reference to the accompanying drawings. In the following description, well-known functions or constructions are not described in detail because they would obscure the invention in unnecessary detail.

The present invention is intended to provide a signal detection apparatus and method for minimizing a required computation volume in a mobile communication system using a space diversity scheme, for example, a MIMO scheme. Particularly, the signal detection apparatus and method detects a signal using sphere decoding that searches for an ML solution in lattice points near to a Babai point in the MIMO mobile communication system in accordance with an embodiment of the present invention. In an alternative embodiment, the signal detection apparatus and method detects a signal using sphere decoding based on V-BLAST in the MIMO mobile communication system.

Sphere decoding is a signal detection method that reduces the average computation volume of the ML detection. Its principle is to draw a sphere having symbol combinations (hereinafter referred to lattice points) with the same cost in a space with lattice points and compare the costs of the lattice points lying within the sphere. As described in the Description of the Related Art, because the sphere decoding searches for an ML solution by reducing the radius of the sphere, it requires an increased volume of computation in detecting the ML solution near to a Babai point.

In accordance with the present invention, therefore, the radius of a sphere is expanded from a Babai point and lattice points lying within the sphere are compared in terms of cost, thereby detecting an ML solution. This signal detection method has a decreased volume of computation relative to the ordinary sphere decoding method.

FIG 4 illustrates signal detection according to an embodiment of the present invention. Referring to FIG 4, a lattice point $\mathbf{x_1}$ closest to a Babai point $\hat{\mathbf{x}}$ is first detected. The Babai point $\hat{\mathbf{x}}$ is detected using the Babai point algorithm. As described above with reference to Equation (5), the Babai point algorithm eliminates inter-symbol interference by multiplying a received signal y by the pseudo inverse matrix $\mathbf{H^+}$ of a channel response matrix $\mathbf{H}$. Therefore, the Babai point is the transmitted signal $\hat{\mathbf{x}}$ free of the inter-symbol interference.

The lattice point $\mathbf{x_1}$ is compared with an ML solution $\mathbf{x_{ML}}$ detected by the ML detection. If $\mathbf{x_1}$ is identical to $\mathbf{x_{ML}}$, no further operation is needed for detecting the ML solution. If $\mathbf{x_1}$ is different from $\mathbf{x_{ML}}$, a lattice point $\mathbf{x_2}$ second-closest to the Babai point $\hat{\mathbf{x}}$ is detected and compared with $\mathbf{x_{ML}}$. According to the comparison result, no further operation is performed for detecting the ML solution, or a lattice point $\mathbf{x_3}$ third-closest to the Babai point $\hat{\mathbf{x}}$ is detected and compared with $\mathbf{x_{ML}}$. By repeating the above operation, the ML solution $\mathbf{x_{ML}}$ is detected.

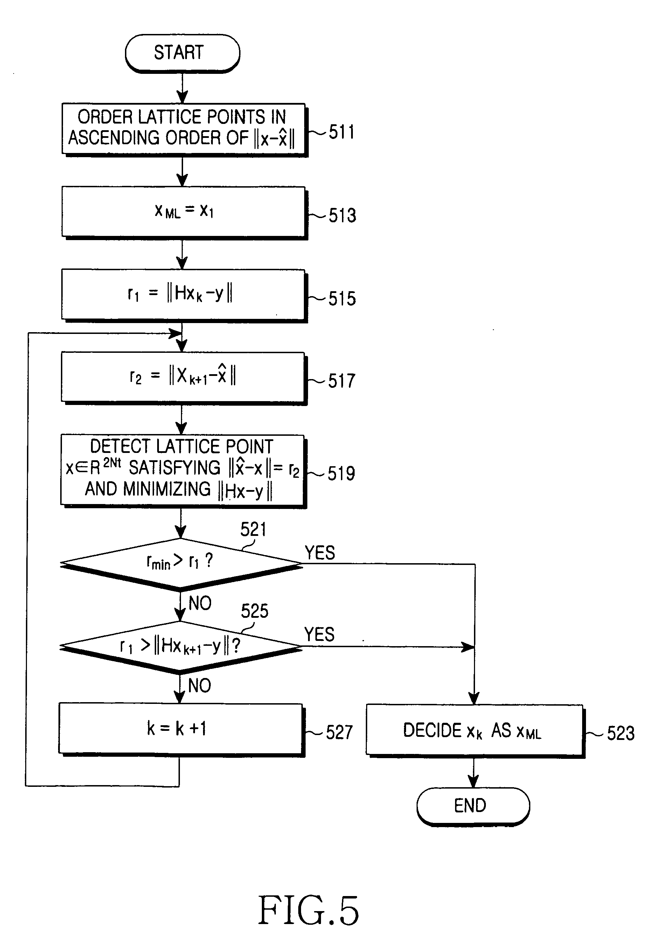

FIG 5 is a flowchart illustrating a signal detection operation according to an embodiment of the present invention. Referring to FIG 5, a detector orders lattice points $\mathbf{x}$ in an ascending order of $\|\mathbf{x}-\hat{\mathbf{x}}\|$ in step 511. In the illustrated case of FIG 5, the lattice points are ordered in the order of $\{\mathbf{x_1}, \mathbf{x_2}, \mathbf{x_3}, ... \}$. As the number of lattice points $\mathbf{x}$ increases, ordering them increases computation volume. Therefore, only necessary lattice points $\mathbf{x}$ are ordered in each iterative detection stage, rather than ordering all possible lattice points in the system at an initialization, which will be descried in detail later.

In step 513, the detector assumes that the lattice point $\mathbf{x_1}$ is the ML solution $\mathbf{x_{ML}}$ ($\mathbf{x_{ML}} = \mathbf{x_1}$) to determine if $\mathbf{x_1}$ is identical to $\mathbf{x_{ML}}$. The detector calculates the distance $r_1$ between a lattice point $\mathbf{x_k}$ and the Babai point $\hat{\mathbf{x}}$ ($r_1 = \|\mathbf{Hx_k} - \mathbf{y}\|$) in step 515 and calculates the cost of a lattice point $\mathbf{x_{k+1}}$ ($r_2 = \|\mathbf{x_{k+1}} - \hat{\mathbf{x}}\|$) in step 517.

In step 519, the detector detects a lattice point $\mathbf{x} \in \mathbf{R}^{2N_l}$, which has the distance to the Babai point equal to that of the lattice point $\mathbf{x_k}$ ($\|\mathbf{x} - \hat{\mathbf{x}}\| = r_2$), and having a minimum cost, that is, a minimum distance $\left( r_{min} = \min_{\mathbf{x} \in \mathbf{R}^{2N_l}} \|\mathbf{Hx} - \mathbf{y}\| \right)$.

The reason for detecting the lattice point $\mathbf{x} \in \mathbf{R}2^{N_l}$ is to determine if $\mathbf{x_k}$ is $\mathbf{x_{ML}}$.

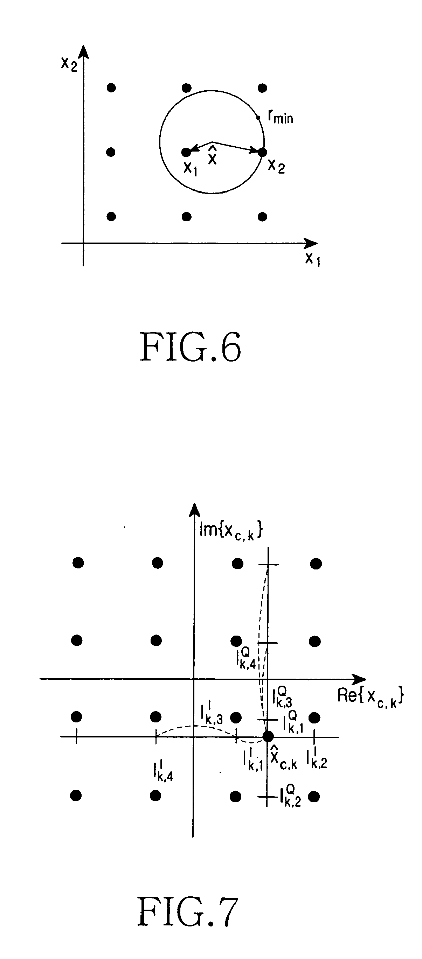

FIG 6 illustrates the positions of lattice points and $r_{min}$ for k=1 in the diagram of FIG 4. Referring to FIG 6, for k=1, the Babai point $\hat{\mathbf{x}}$, the lattice point $\mathbf{x_1}$ with the minimum value of $\|\mathbf{x} - \mathbf{x}\|$, the lattice point $\mathbf{x_2}$ with the second minimum value of $\|\mathbf{x} - \mathbf{x}\|$, and $r_{min}$ are illustrated.

In step 521, the detector determines if the minimum distance $r_{min}$ exceeds the distance $r_1$ between a lattice point $\mathbf{x_k}$ and the Babai point $\hat{\mathbf{x}}$ ($r_{min} > r_1$). If $r_{min}$ exceeds $r_1$, the detector sets the lattice point $\mathbf{x_k}$ to be the ML solution $\mathbf{x_{ML}}$ in step 523 and the detection procedure ends.

However, if $r_{min}$ is equal to or less than $r_1$, the detector determines if the distance $r_1$ between a lattice point $\mathbf{x_k}$ and the Babai point $\hat{\mathbf{x}}$ exceeds the distance $\|\mathbf{Hx_{k+1}} - \mathbf{yi}\|$ between the lattice point $\mathbf{x_{k+1}}$ and the Babai point $\hat{\mathbf{x}}$ in step 525. If $r_1$ exceeds $\|\mathbf{Hx_{k+1}} - \mathbf{y}\|$, the detector goes to step 523.

However, if $r_1$ is equal to or less than $\|\mathbf{Hx_{k+1}}, \mathbf{-y}\|$, the detector increases the variable k by 1 (k=k+1) in order to perform the signal detection on a lattice point with the next larger $\|\mathbf{x} - \hat{\mathbf{x}}\|$ value to that of the lattice point $\mathbf{x_k}$ in step 527, and then returns to step 515.

For the signal detection, the minimum distance $r_{min}$ must be calculated at every iterative decoding in the embodiment of the present invention. $r_{min}$ is calculated with a relatively small computation volume using the eigen values and eigen vectors of the matrix product $\mathbf{H^H H}$ of the channel response matrix $\mathbf{H}$ and its conjugate transpose matrix $\mathbf{H^H}$ as shown in Equation (7):

$$r_{min} = \left\| boleH(\mathbf{x} + r_2\mathbf{u}) - \mathbf{y} \right\|,$$

$$\cdots \cdots (7)$$

where u denotes an eigen vector associated with the minimum eigen value of $\mathbf{H^H H}$, satisfying $\|\mathbf{u}\| = 1$. While the eigen vector u is used in computing the minimum distance $r_{min}$ in Equation (7), direct substitution of the eigen value can reduce the computation volume involved in calculating the minimum distance $r_{min}$.

The detector orders the lattice points $\mathbf{x}$ in an ascending order of $\|\mathbf{x} - \hat{\mathbf{x}}\|$ in step 511. This operation usually requires a very large mount of computation volume near to that of detecting the ML solution $X_{ML}$. However, the lattice points x are limited due to modulation in the typical mobile communication system. If they have a specific distribution, the ordering can be performed with a relatively small amount of computation by approaching in terms of the shortest path problem.

For example, if the transmitter uses 16QAM, the distance between each of the lattice points x and the Babai point $\hat{\mathbf{x}}$ is computed independently for the respective Tx antennas and the resulting distances are summed. Alternatively, the distance between the lattice point x and the Babai point $\hat{\mathbf{x}}$ for each Tx antenna can be computed separately for real and imaginary components, which will be described with reference to FIG 7.

Referring to FIG 7, the distance between a signal transmitted by a $k^{th}$ Tx antenna, that is, a lattice point $\mathbf{X_{c,k}}$ and a Babai point $\hat{\mathbf{x}}_{c,k}$, can be computed using a real component distance $l_{k,n}^{I}$ and an imaginary component distance $l_{k,n}^{Q}$. For Nt Tx antennas, $\|\mathbf{x} - \hat{\mathbf{x}}\|$ can be modeled in the shortest path problem approach, taking into account the $N_t$ Tx antennas.

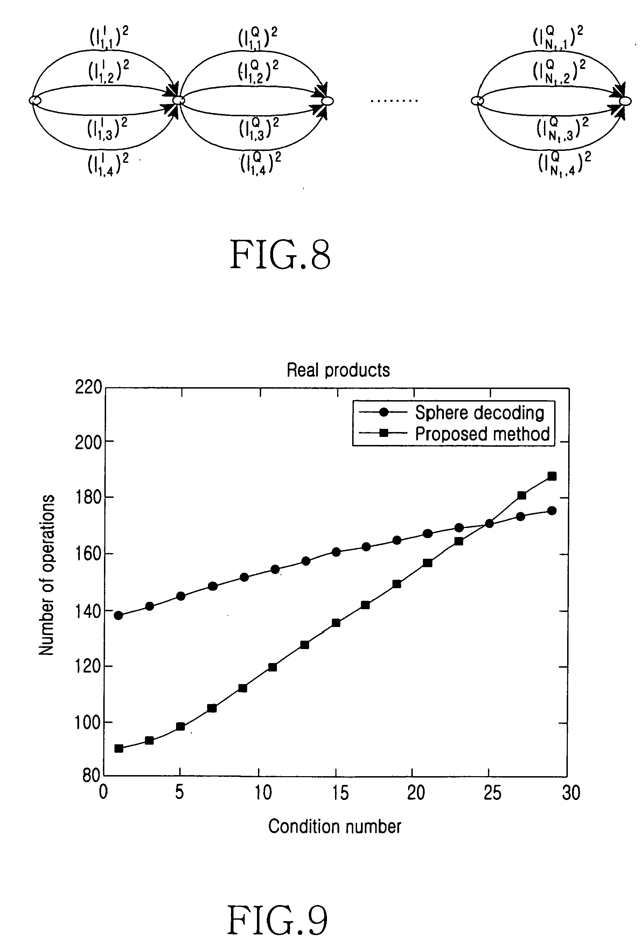

FIG 8 illustrates calculation of a distance between the lattice point x and the Babai point $\hat{\mathbf{x}}$ by modeling based on the shortest path problem. Referring to FIG 8, the ordering of the lattice points x in an ascending order of $\|\mathbf{x} - \hat{\mathbf{x}}\|$ can be modeled based on the shortest path problem approach. Compared to the ordering of the lattice points $\mathbf{x}$ in a general method, the ordering of the lattice points x according to the shortest path problem-based model reduces computation volume remarkably.

The signal detection according to the embodiment of the present invention requires a more volume of computation as the condition number of the channel response matrix $\mathbf{H}$ increases. That is, decreasing the condition number of H can reduce the computation volume required for the signal detection. Now a description will be made of methods of reducing the condition number of H.

One method of reducing the condition number of $\mathbf{H}$ is to use a diagonal matrix $\mathbf{D}$. More specifically, to reduce the condition number of $\mathbf{H}$, $\mathbf{H}$ is scaled using $\mathbf{D}$. In this case, the received signal y is expressed as shown in Equation (8).

$$\mathbf{y} = \mathbf{Hx} + \mathbf{n} = \mathbf{HD^{-1}Dx} + \mathbf{n}$$

$$\cdots \cdots (8)$$

As noted from Equation (8), the channel response matrix $\mathbf{H}$ is considered to be the matrix product $\mathbf{HD^{-1}}$ of the channel response matrix $\mathbf{H}$ and the inverse matrix $\mathbf{D^{-1}}$ of the diagonal matrix $\mathbf{D}$ and a transmitted signal $\mathbf{x}$ is considered to be the matrix product $\mathbf{Dx}$ of the transmitted signal $\mathbf{x}$ and the diagonal matrix $\mathbf{D}$, for signal detection in accordance with the embodiment of the present invention. The diagonal matrix $\mathbf{D}$ that minimizes the 2-norm condition number of $\mathbf{HD^{-1}}$ is shown in Equation (9).

$$\mathbf{D} = \text{diag}\{d_1, d_2, \ldots, d_{2N_t}\}$$

$$\ldots\ldots (9)$$

Each element of the diagonal matrix **D** is computed by Equation (10).

$$d_k = \|\text{kth column of } \mathbf{H}\|$$

$$\ldots\ldots (10)$$

As described above, the use of the diagonal matrix **D** enables the decrease of the condition number of the channel response matrix **H**, while maintaining the number of total lattice points, in detecting the ML solution $\mathbf{x}_{ML}$. Consequently, the computation volume involved in signal detection is decreased.

Another method of reducing the condition number of the channel response matrix **H** is to use a transformation matrix $\mathbf{T_n}$.

The transformation matrix $\mathbf{T_n}$ must be designed such that the condition number of the channel response matrix **H** is reduced without increasing the number of the total lattice points. If the transformation matrix $\mathbf{T_n}$ is an arbitrary matrix, the computation volume of the shortest path problem approach is increased, which in turn, increases the computation volume for the signal detection in the embodiment of the present invention. Therefore, because design of the transformation matrix $\mathbf{T_n}$ is directly related to the computation volume of the signal detection, it is a very significant factor.

Under the assumption that the channel response matrix **H** is a 2x2 matrix, there are six transformation matrices $\mathbf{T_n}$ ($\mathbf{T_1}$ to $\mathbf{T_6}$ as shown in Equation 11 below) that adjust the condition number of **H**, increasing the number of the total lattice points by once to four times relative to the original signal detection method.

$$\mathbf{T_1} = \begin{bmatrix} 1 & 0 \\ 0 & 1 \end{bmatrix}, \ \mathbf{T_2} = \begin{bmatrix} 1 & 1 \\ 0 & 1 \end{bmatrix}, \ \mathbf{T_3} = \begin{bmatrix} 0 & 1 \\ -1 & 1 \end{bmatrix}, \ \mathbf{T_4} = \begin{bmatrix} 1 & 0 \\ -1 & 1 \end{bmatrix}, \ \mathbf{T_5} = \begin{bmatrix} 1 & 1 \\ -1 & 0 \end{bmatrix}, \ \mathbf{T_6} = \begin{bmatrix} 1 & 1 \\ -1 & 1 \end{bmatrix}$$

$$\ldots\ldots (11)$$

A third method of reducing the condition number of the channel response matrix **H** can be contemplated by using both the diagonal matrix **D** and the transformation matrix $\mathbf{T_n}$. In this method, $\mathbf{HT_n^{-1}D^{-1}}$ becomes a novel channel response matrix **H** and a transformation matrix $\mathbf{T_n}$ is selected which minimizes the condition number of $\mathbf{HT_n^{-1}D^{-1}}$.

FIG 9 is a graph comparing the signal detection according to an embodiment of the present invention with the ordinary sphere decoding in terms of the number of real multiplications with respect to the 2-norm condition number of the channel response matrix **H** when the channel response matrix **H** is a 6x4 matrix and the elements of the lattice point x are generated in 16QAM. The ordinary sphere decoding is based on the Schnorr-Euchner strategy and a signal-to-noise ratio (SNR) of 10[dB] is assumed.

Referring to FIG 9, the signal detection according to the embodiment of the present invention requires a smaller number of real multiplications than the ordinary sphere decoding when the 2-norm condition number of the channel response matrix is below 25.

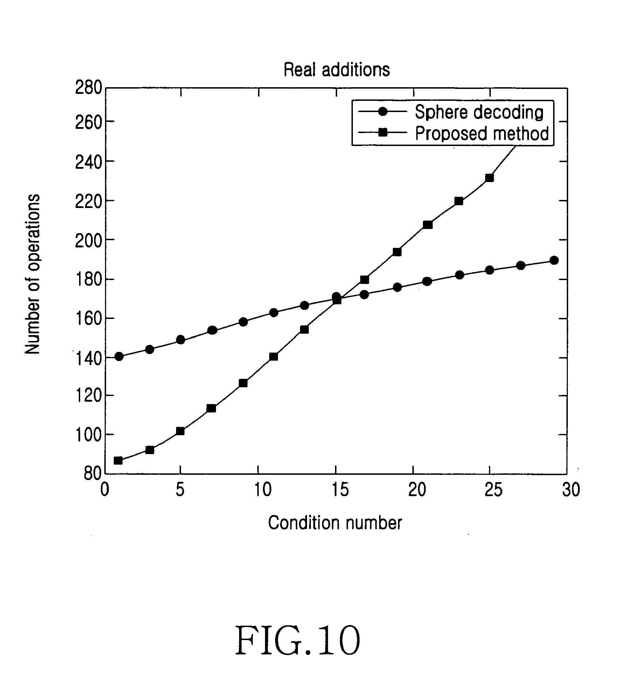

FIG 10 is a graph comparing the signal detection according to the embodiment of the present invention with the ordinary sphere decoding in terms of the number of real additions with respect to the 2-norm condition number of the channel response matrix **H** when the channel response matrix **H** is a 6x4 matrix and the elements of the lattice point **x** are generated in 16QAM. The ordinary sphere decoding is based on the Schnorr-Euchner strategy and an SNR of 10 [dB] is assumed.

Referring to FIG 10, the signal detection according to the embodiment of the present invention requires a smaller number of real additions than the ordinary sphere decoding when the 2-norm condition number of the channel response matrix is below 15.

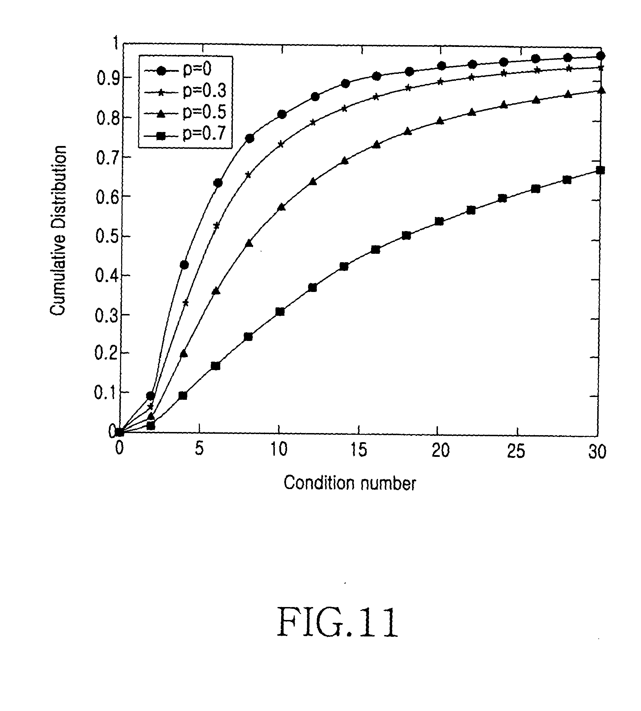

FIG 11 is a graph illustrating the cumulative probability distribution of the 6x4 channel response matrix **H** in signal detection according to the embodiment of the present invention. Referring to FIG 11, the cumulative probability distribution of the channel response matrix **H** is shown with respect to the correlation, i.e., channel correlation, between adjacent elements of **H** varying from 0 to 0.3, 0.5, and 0.7.

As noted from the graph, the probability of the condition number of **H** being below 25 at the channel correlation of 0.5 is 80%, and it approaches 90% when the channel correlation is 0.3. Considering that the typical MIMO communication system usually takes into account a channel correlation of 0.3 to 0.5, the probability of the condition number of **H** being below 25 is 80 to 90%, taking a smaller number of real multiplications than the sphere decoding in the signal detection method according to the embodiment of the present invention.

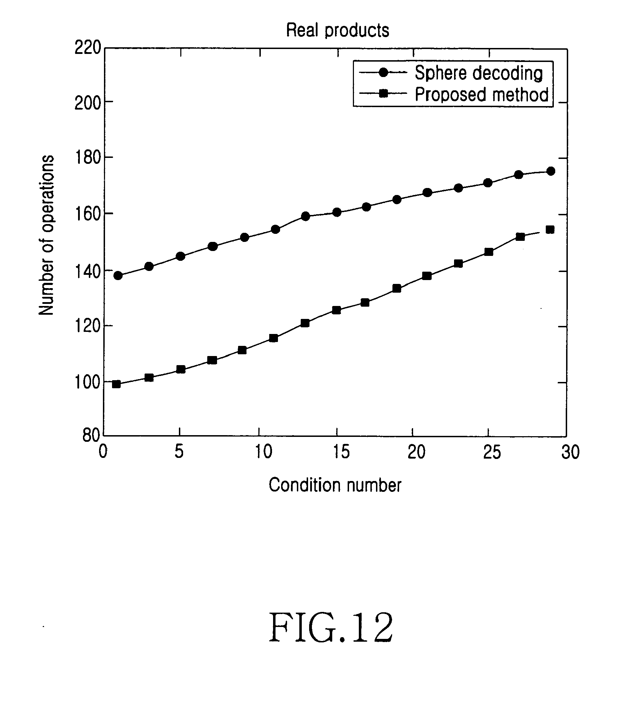

FIG 12 is a graph comparing the signal detection according to the embodiment of the present invention with the ordinary sphere decoding in terms of the number of real multiplications with respect to the 2-norm condition number of the channel response matrix **H** when the channel response matrix **H** is a 6x4 matrix, the elements of the lattice point **x** are generated in 16QAM, and the transformation matrix **T$_n$** is used. Referring to FIG 12, it is noted that **T$_n$** application further reduces the computation volume, compared to non-**T$_n$** application illustrated in FIG 9, and needs a smaller number of real multiplications than the sphere decoding even when the condition number of the channel response matrix is 25.

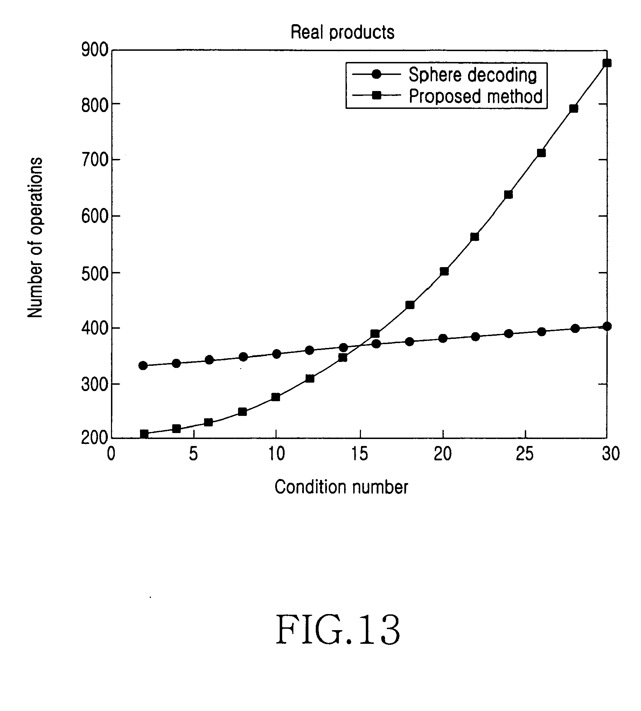

FIG 13 is a graph comparing the signal detection according to the embodiment of the present invention with the ordinary sphere decoding in terms of the number of real multiplications with respect to the 2-norm condition number of the channel response matrix **H** when the channel response matrix **H** is a 10x6 matrix and the elements of the lattice point x are generated in 16QAM. Referring to FIG 13, the present invention and the sphere decoding are reversed in the number of real multiplications when the condition number of the channel response matrix **H** is near 15.

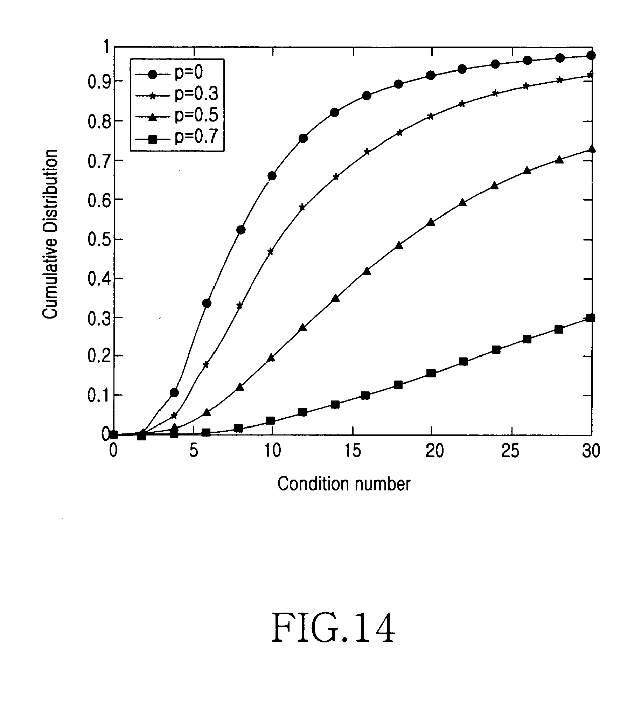

FIG 14 is a graph illustrating the cumulative probability distribution of the 6x4 channel response matrix **H** in signal detection according to the embodiment of the present invention. Referring to FIG 14, the cumulative probability distribution of the channel response matrix **H** is shown with respect to the correlation (i.e. channel correlation) between adjacent elements of **H** varying from 0 to 0.3, 0.5, and 0.7. As noted from the graph, the probability of the condition number of H being below 15 at the channel correlation of 0.3 is approximately 70%.

Signal detection according to an alternative embodiment of the present invention will be described below.

The basic signal model in the MIMO communication system under a narrowband, flat-fading, and quasi-static channel environment is given in Equation (12):

$$\mathbf{r}[n] = \mathbf{H}[n]\mathbf{d}[n] + \mathbf{w}[n], \quad n = 1, \ldots, L,$$

$$\ldots\ldots(12)$$

where r[n] denotes an Nx1 received vector, **H[n]** denotes an NxM channel response matrix, d[n] denotes an Mxq transmit vector, **w[n]** denotes Nx1 Additive White Gaussian Noise (AGWN), and L denotes the number of multiple paths.

The ML solution $\hat{\mathbf{d}}_{ML}$ of the transmit vector **d[n]** is computed using Equation (13).

$$\hat{\mathbf{d}}_{ML} = \arg\max_{\mathbf{d}\in C^M} \; p(\mathbf{r}|\mathbf{d}, \mathbf{H}) = \arg\min_{\mathbf{d}\in C^M} \; \|\mathbf{r} - \mathbf{H}\mathbf{d}\|^2$$

$$\ldots\ldots(13)$$

The ML solution $\hat{\mathbf{d}}_{ML}$ is detected using the sphere decoding in the following way.

The QR deposition of the channel response matrix **H** is formulated as shown in Equation (14):

$$\mathbf{H} = \mathbf{Q} \begin{bmatrix} \mathbf{R} \\ 0_{(N-M) \times M} \end{bmatrix} = \begin{bmatrix} \mathbf{Q_1} \ \mathbf{Q_2} \end{bmatrix} \begin{bmatrix} \mathbf{R} \\ 0_{(N-M) \times M} \end{bmatrix},$$

$$\ldots \ldots (14)$$

where **R=[rij]** denotes an MxM upper triangular matrix, and **Q** denotes an NxN unitary matrix satisfying N≥M. The first M columns of the matrix **Q** form the matrix **Q₁** and the remaining (N-M) columns of the matrix **Q** form the matrix **Q₂**.

The condition for **Hd** being within the radius p of a sphere is $\rho^2 \geq \|\mathbf{r} - \mathbf{Hd}\|^2$, satisfying Equation (15).

$$\rho^2 \geq \left\| \mathbf{r} - \begin{bmatrix} \mathbf{Q_1} \ \mathbf{Q_2} \end{bmatrix} \begin{bmatrix} \mathbf{R} \\ 0 \end{bmatrix} \mathbf{d} \right\|^2 = \left\| \begin{bmatrix} \mathbf{Q_1^H} \\ \mathbf{Q_2^H} \end{bmatrix} \mathbf{r} - \begin{bmatrix} \mathbf{R} \\ 0 \end{bmatrix} \mathbf{d} \right\|^2 = \left\| \mathbf{Q_1^H r} - \mathbf{Rd} \right\|^2 + \left\| \mathbf{Q_2^H r} \right\|^2$$

$$\ldots \ldots (15)$$

Assuming that $\rho'^2 \equiv \rho^2 - \left\| \mathbf{Q_2^H r} \right\|^2$ and $\overset{H}{_1}$ Equation (15) can be rewritten as shown in Equation (16).

$$\rho'^2 \geq \|\mathbf{y} - \mathbf{Rd}\|^2 = \left( y_M - r_{M,M} d_M \right)^2 + \left( y_{M-1} - r_{M-1,M} d_M - r_{M-1,M-1} d_{M-1} \right)^2 +$$
$$\ldots + \left( y_1 - r_{1,M} d_M - r_{1,M-1} d_{M-1} \ldots - r_{1,1} d_1 \right)$$

$$\ldots \ldots (16)$$

A necessary condition for satisfying Equation (16) for an element $d_M$ is $\rho'^2 \geq (y_M - r_{M,M} d_M)^2$, which can be shown as Equation (17).

$$\left( \frac{-\rho' + y_M}{r_{M,M}} \right) \leq d_M \leq \left( \frac{\rho' + y_M}{r_{M,M}} \right)$$

$$\ldots \ldots (17)$$

A necessary condition for satisfying Equation (16) for the remaining elements $d_k$ except $d_M$ is recursively obtained using Equation (18):

$$\left( \frac{-\rho'_k + y_{k|k+1}}{r_{k,k}} \right) \leq d_k \leq \left( \frac{\rho'_k + y_{k|k+1}}{r_{k,k}} \right), \quad (k = M-1, \ldots, 1)$$

$$\ldots \ldots (18)$$

where $\sum\limits_{j=k+1}^{M}$ and initial values are $\rho'^2_M = \rho'^2$ and $y_{M|M+1} = y_M$.

For notational simplicity, the conditions of Equation (17) and Equation (18) are simplified as shown in Equation (19):

$$d_k \in I_k = [L_k, U_k], \quad (k = M, \ldots, 1)$$

$$\ldots \ldots (19)$$

where $L_k$ and $U_k$ are defined by Equations (20) and (21).

$$L_k = \left( \frac{-\rho'_k + y_{k|k+1}}{r_{k,k}} \right)$$

$$\ldots \ldots (20)$$

$$U_k = \left( \frac{\rho'_k + y_{k|k+1}}{r_{k,k}} \right)$$

$$\ldots \ldots (21)$$

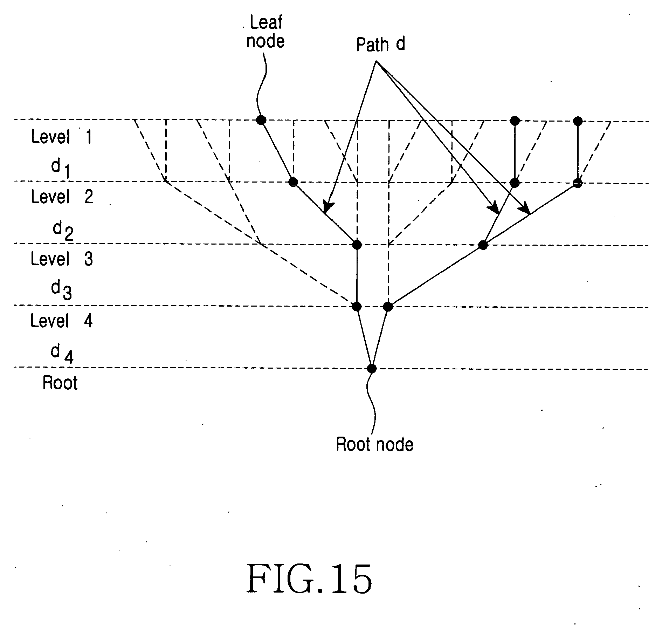

The above-described enumeration can be expressed in a tree structure, which will be described with reference to FIG 15.

Referring to FIG 15, a level in the tree structure corresponds to k in Equation (18) and a line connecting a root node to a leaf node is a lattice point lying within a sphere, that is, a lattice point **d** satisfying both Equations (17) and (18).

As described above, signal detection using the sphere decoding follows signal detection using a Modified Decorrelating Decision Feedback (MDDF) method in the alternative embodiment of the present invention, i.e., the algorithm as shown in Equation (22):

*Step* 1 (Initialization)

$$k = M, \quad \rho'^2_M = \rho'^2, \quad y_{M|M+1} = y_M$$

*Step* 2 (Determine spanning set)

$$\alpha_m = y_{k|k+1}/r_{k,k}$$

Lower bound $L_k = -\rho'_k/r_{k,k} + \alpha_k$

Upper bound $U_k = \rho'_k/r_{k,k} + \alpha_k$

Spanning set $S_k = E(\alpha_k) \cap I_k$, where $I_k = [L_k, U_k]$

$i_k = 0$

Go to Step 4.

Step 3 (Update spanning set)

if $f_k = 1$

    Clear and set flags $f_k = 0$, $f_{k+1} = 1$

    $\rho'^2_k = \rho'^2_{k-1} + \left(y_{k|k+1} - r_{k,k}d_k\right)^2$ with $\rho'^2_0 = 0$

    Update lower bound $L_k = -\rho'_k/r_{k,k} + \alpha_k$

    Update upper bound $U_k = \rho'_k/r_{k,k} + \alpha_k$

    Update spanning set $S_k = E(\alpha_k) \cap I_k$

end

Step 4 (Spanning)

$\quad$ if $i_k < \text{Card}(S_k)$

$\qquad$ Increase $i_k : i_k = i_k + 1$

$\qquad$ $d_k = S_k[i_k]$, where $S_k[i_k]$ *means* the $i_k$*th element* of $S_k$

$\qquad$ Go to step 6.

$\quad$ else

$\qquad$ Go to step 5.

$\quad$ end

Step 5 (Move one level down)

$\quad$ if $k = M,$

$\qquad$ Terminate the algorithm

$\quad$ else

$\qquad$ Increase $k : k = k + 1$

$\qquad$ Got to Step 3.

$\quad$ end

Step 6 (Move one level up)

$\quad$ if $k = 1,$

$\qquad$ Go to step 7.

$\quad$ else

$$\rho'^2_{k-1} = \rho'^2_k - \left( y_{k|k+1} - r_{k,k} d_k \right)^2$$

$\qquad$ Decrease $k : k = k - 1$

$$y_{k|k+1} = y_k - \sum_{k=k+1}^{M} r_{k,j} d_j$$

$\qquad$ Go to Step 2.

$$\ldots\ldots (22)$$

where k denotes a level in the tree structure illustrated in FIG 15, $f_k$ denotes a $k^{th}$ update flag, and $Ep(\alpha_k)$ denotes the enumeration function of a lattice point set P.

For example, if $L_k$=-8, $U_k$=4, P={-7, -5, -3, -1, 1, 3, 5, 7} (8PAM), $\alpha_k$=0.5, and a Pohst enumeration is used, Ep$(\alpha_k)$={-7, -5, -3, -1, 1, 3, 5, 7} and the spanning order $S_k = E_{P(\alpha_k) \cap l_k}$= {-7, -5, -3, -1, 1, 3}. In the Schnorr-Euchner enumeration, as the elements of the lattice point set P are ordered according to the distance from $\alpha_k$, $E_P(\alpha_k)$={1, -1, 3, -3, 5, -5, 7, -7}. Therefore, the spanning order $S_k = E_{P(\alpha_k) \cap l_k}$ = {1, -1, 3, -3, -5, -7}. Card($S_k$) in Step 4 denotes the cardinality of the spanning order $S_K$.

As noted from Equation (22), while signal detection based on the ordinary sphere decoding is performed in six steps, the sphere decoding according to the alternative embodiment of the present invention is done in seven steps because parameter recalculation is carried out as a separate step, Step 3. Recalculation of a sphere radius and parameters in the sphere decoding according to the alternative embodiment of the present invention will be described in more detail below.

Once the lattice point $\hat{d}$ lying inside the sphere is detected in Step 7, the sphere radius p' is updated to $\|\mathbf{y} - \mathbf{Rd}\|$. The matrix R=[$r_{i,j}$], which is an MxM upper triangular matrix, is expressed as shown in Equation (23):

$$\rho'^2 = \left(y_M - r_{M,M}\hat{d}_M\right)^2 + \left(y_{M-1} - r_{M-1,M}\hat{d}_M - r_{M-1,M-1}\hat{d}_{M-1}\right)^2 +$$
$$\ldots + \left(y_1 - r_{1,M}\hat{d}_M - r_{1,M-1}\hat{d}_{M-1} \ldots - r_{1,1}\hat{d}_1\right)'$$

$$\ldots \ldots (23)$$

where $y_i$ and $\hat{d}_i$ denote $i^{th}$ elements and $r_{ij}$ denotes the element of an $i^{th}$ row and a $j^{th}$ column in the matrix **R**.

As compared to the ordinary sphere decoding, an update flag $f_1$ is just set to 1 and then $\rho'_1{}^2$, $I_1$, and $S_1$ are recalculated in Step 3, rather than the sphere radius p' is directly computed by Equation (23) in the alternative embodiment of the present invention. However, because $\rho'^2_k = \rho'^2_{k+1} - \left(y_{k+1|k+2} - r_{k+1,k+1}d_{k+1}\right)^2$ and $y_{k|k+1} = y_k - \sum_{j=k+1}^{M} r_{kj}d_j$, $\rho'_1{}^2$ satisfies Equation (24).

$$\rho'^2_0 = \rho'^2_1 - \left(y_{1|2} - r_{1,1}\hat{d}_1\right)^2 = 0$$

$$\ldots \ldots (24)$$

Thus, $\rho'^2_1$ can be expressed as shown in Equation (25).

$$\rho'^2_1 = \left(y_{1|2} - r_{1,1}\hat{d}_1\right)^2$$

$$\ldots \ldots (25)$$

Therefore, $I_1$ and $S_1$ are recalculated for $\rho'_1{}^2$.

When the level k exceeds 1, the following is derived from $\rho'^2_k$

$$\rho'^2_k = \rho'^2_{k-1} + \left(y_{k|k+1} - r_{k,k}d_k\right)^2$$

$$\ldots \ldots (26)$$

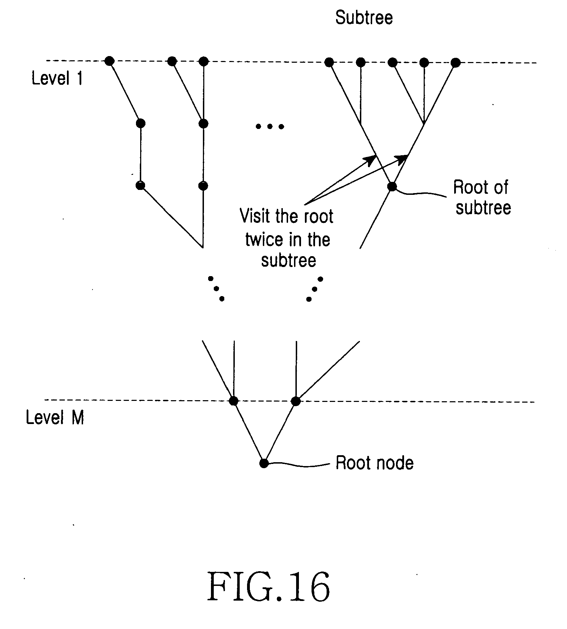

As noted from Equation (26), $\rho'_k{}^2$ can be updated using the previous calculated $\rho'_{k-1}{}^2$ only if fk is 1 and a (k-1)$^{th}$ level is transitioned to a k$^{th}$ level in the tree structure. The update flag functions to remove the unnecessary operation of recalculating the sphere radius and the parameters, which will be described with reference to FIG 16.

FIG 16 illustrates a tree structure and a subtree structure according to the alternative embodiment of the present invention. Referring to FIG 16, $\rho'_k$ and other parameters at the k$^{th}$ level are recalculated only when checking the k$^{th}$ level in a subtree structure having a root node at the k$^{th}$ level, compared to the ordinary sphere decoding method where they are recalculated every time a lattice point is found within the sphere. That is, although five lattice points are found in the subtree, $\rho'_2$ is updated only twice in FIG 16.

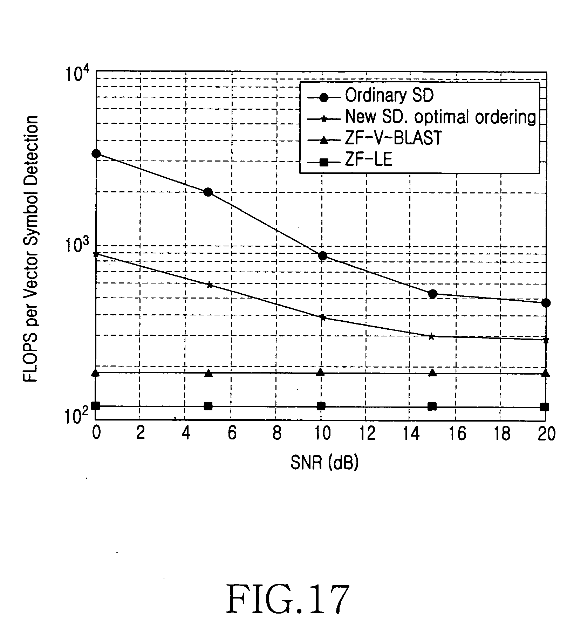

FIG 17 is a graph comparing the signal detection according to the alternative embodiment of the present invention with the ordinary sphere decoding in terms of average computation volume in the case of a 4x4 MIMO channel and QPSK. It is assumed that the 4x4 MIMO channel is a quasi-static Rayleigh flat fading channel, the receiver has knowledge of the channel, and channel coding is not applied to the channel. It is also assumed that in the ordinary sphere decoding method, (1) signal detection is performed by sphere decoding using a sphere radius $\rho$ satisfying $P\{\|\mathbf{r} - \mathbf{Hd}\|^2 \leq \rho^2\} = 0.99$, (2) if the signal detection fails, signal detection is performed by expanding the sphere radius p to satisfy $P\{\|\mathbf{r} - \mathbf{Hd}\|^2 \leq \rho^2\} = 0.99$, and (3) if the signal detection using the expanded sphere radius p fails again, the signal detection is terminated.

Referring to FIG 17, the average computation volume is much less in the signal detection according to the alternative embodiment of the present invention than in the ordinary sphere decoding. Especially, the average computation volume in the signal detection scheme of the present invention approaches that of signal detection based on V-BLAST at a relatively high SNR.

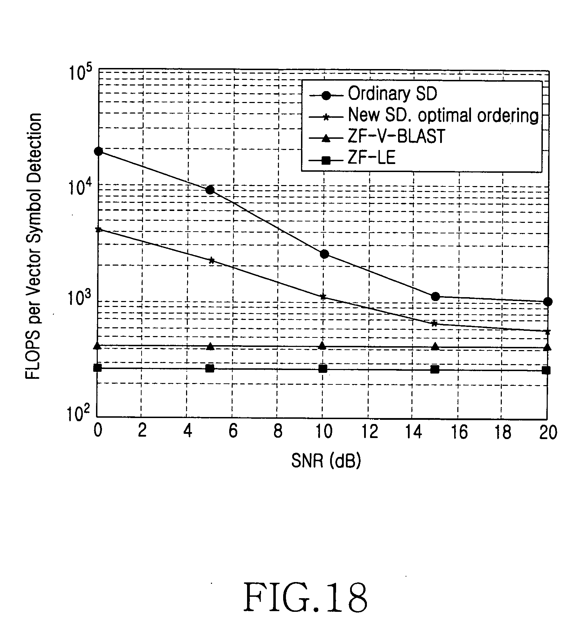

FIG 18 is a graph comparing the signal detection according to the alternative embodiment of the present invention with the ordinary sphere decoding in terms of average computation volume in the case of a 6x6 MIMO channel and QPSK. It is assumed that the 6x6 MIMO channel is a quasi-static Rayleigh flat fading channel, the receiver has knowledge of the channel, and channel coding is not applied to the channel. It is also assumed that in the ordinary sphere decoding method, (1) signal detection is performed by sphere decoding using a sphere radius p satisfying $P\{\|\mathbf{r} - \mathbf{Hd}\|^2 \leq \rho^2\} = 0.99$ , (2) if the signal detection fails, signal detection is performed by expanding the sphere radius p to satisfy $P\{\|\mathbf{r} - \mathbf{Hd}\|^2 \leq \rho^2\} = 0.99$, and (3) if the signal detection using the expanded sphere radius p fails again, the signal detection is terminated.

Referring to FIG 18, the average computation volume is much less in the signal detection according to the alternative embodiment of the present invention than in the ordinary sphere decoding. Especially, the average computation volume in the signal detection scheme of the present invention approaches that of the signal detection based on V-BLAST at a relatively high SNR.

As described above, the present invention enables accurate signal detection with a minimum computation volume by providing a signal detection scheme using sphere decoding in which signal detection starts with lattice points near to a Babai point in a MIMO mobile communication system. The present invention also provides a signal detection scheme V-BLAST-based sphere decoding in the MIMO mobile communication system, thereby enabling accurate signal detection.

While the present invention has been shown and described with reference to certain preferred embodiments thereof, it will be understood by those skilled in the art that various changes in form and details may be made therein without departing from the scope of the present invention as defined by the appended claims.

**Claims**

1. A signal detection method in a receiver in a MIMO mobile communication system, comprising the steps of:

   ordering symbol combinations transmittable from a transmitter in the MIMO mobile communication system in an ascending order of a difference between each of the symbol combinations and transmit symbols produced by eliminating inter-symbol interference from a received signal;
   initializing a symbol combination with a minimum difference to a maximum likelihood, ML, solution;
   calculating a distance between an arbitrary first symbol combination and the transmit symbols, and a cost of an arbitrary second symbol combination;
   detecting a symbol combination having a distance to the transmit symbols equal to the distance between the first symbol combination and the transmit symbols, and having a minimum distance; and
   deciding the first symbol combination as the ML solution if the minimum distance exceeds the distance between the first symbol combination and the transmit symbols.

2. The signal detection method of claim 1, further comprising the step of, if the minimum distance is equal to or less than the distance between the first symbol combination and the transmit symbols and the distance between the first symbol combination and the transmit symbols exceeds the distance between the second symbol combination and the transmit symbols, deciding the first symbol combination as the ML solution.

3. The signal detection method of claim 1 or 2, wherein the symbol combinations are ordered in an ascending order of the difference between each of the symbol combinations and the transmit symbols using a shortest path problem method.

4. The signal detection method of one of claims 1 to 3, wherein the step of ordering the symbol combinations comprises the steps of:

calculating the distance between each of symbol combinations corresponding to a modulation scheme used in the transmitter and the transmit symbols independently for each of transmit antennas of the transmitter;

summing the distances of the each symbol combination calculated for the respective transmit antennas as the distance between the each symbol combination and the transmit symbols; and

ordering the symbol combinations in an ascending order of the sums of the symbol combinations.

5. The signal detection method of claim 4, wherein the distance between the each symbol combination and the transmit symbols separately calculated for real and imaginary components.

6. The signal detection method of claim 5, further comprising the step of:

reducing a condition number of a channel response matrix representing a channel between the transmitter and the receiver by deciding the channel response matrix to be the matrix product of the channel response matrix and the inverse matrix of a predetermined diagonal matrix, and deciding the transmit symbols to be the matrix product of the diagonal matrix and the transmit symbols.

7. The signal detection method of claim 6, wherein each of the elements of the diagonal matrix is an absolute value of each of the columns of the channel response matrix.

8. The signal detection method of claim 5, further comprising the step of:

reducing a condition number of the channel response matrix by deciding the channel response matrix to be the matrix product of the channel response matrix, the inverse matrix of the diagonal matrix, and the inverse matrix of a predetermined transformation matrix.

9. The signal detection method of claim 8, wherein if the channel response matrix is a 2x2 matrix, the transformation matrix is one of $T_1$ to $T_6$, where $\mathbf{T_1} = \begin{bmatrix} 1 & 0 \\ 0 & 1 \end{bmatrix}$, $\mathbf{T_2} = \begin{bmatrix} 1 & 1 \\ 0 & 1 \end{bmatrix}$, $\mathbf{T_3} = \begin{bmatrix} 0 & 1 \\ -1 & 1 \end{bmatrix}$, $\mathbf{T_4} = \begin{bmatrix} 1 & 0 \\ -1 & 1 \end{bmatrix}$,

$\mathbf{T_5} = \begin{bmatrix} 1 & 1 \\ -1 & 0 \end{bmatrix}$, and $\mathbf{T_6} = \begin{bmatrix} 1 & 1 \\ -1 & 1 \end{bmatrix}$.

10. A signal detection apparatus in a receiver in a MIMO mobile communication system, comprising:

a detector for ordering symbol combinations transmittable from a transmitter in the MIMO mobile communication system in an ascending order of a difference between each of the symbol combinations and transmit symbols produced by eliminating inter-symbol interference from a received signal, initializing a symbol combination with a minimum difference to a maximum likelihood, ML, solution, calculating a distance between an arbitrary first symbol combination and the transmit symbols, and a cost of an arbitrary second symbol combination, detecting a symbol combination having a distance to the transmit symbols equal to the distance between the first symbol combination and the transmit symbols, and having a minimum distance, and deciding the first symbol combination as the ML solution if the minimum distance exceeds the distance between the first symbol combination and the transmit symbols; and

a demodulator for demodulating the ML solution in a demodulation method corresponding to a modulation scheme used in the transmitter.

11. The signal detection apparatus of claim 10, wherein, if the minimum distance is equal to or less than the distance between the first symbol combination and the transmit symbols and the distance between the first symbol combination and the transmit symbols exceeds the distance between the second symbol combination and the transmit symbols, the detector decides the first symbol combination as the ML solution.

12. The signal detection apparatus of claim 10 or 11, wherein the detector orders the symbol combinations in an ascending order of the difference between each of the symbol combinations and the transmit symbols using a shortest path problem method.

13. The signal detection apparatus of one of claims 10 to 12, wherein the detector calculates the distance between each of symbol combinations corresponding to a modulation scheme used in the transmitter and the transmit symbols independently for each of transmit antennas of the transmitter, sums the distances of the each symbol combination calculated for the respective transmit antennas as the distance between the each symbol combination and the transmit symbols, and orders the symbol combinations in an ascending order of the sums of the symbol combinations.

14. The signal detection apparatus of claim 13, wherein the detector calculates the distance between the each symbol combination and the transmit symbols separately for real and imaginary components.

15. The signal detection apparatus of claim 14, wherein the detector reduces a condition number of a channel response matrix representing a channel between the transmitter and the receiver by deciding the channel response matrix to be the matrix product of the channel response matrix and the inverse matrix of a predetermined diagonal matrix, and deciding the transmit symbols to be the matrix product of the diagonal matrix and the transmit symbols.

16. The signal detection apparatus of claim 15, wherein each of the elements of the diagonal matrix is the absolute value of each of the columns of the channel response matrix.

17. The signal detection apparatus of claim 14, wherein the detector reduces the condition number of the channel response matrix by deciding the channel response matrix to be the matrix product of the channel response matrix, the inverse matrix of the diagonal matrix, and the inverse matrix of a predetermined transformation matrix.

18. The signal detection apparatus of claim 17, wherein if the channel response matrix is a 2x2 matrix, the transformation matrix is one of $T_1$ to $T_6$, where $\mathbf{T}_1 = \begin{bmatrix} 1 & 0 \\ 0 & 1 \end{bmatrix}$, $\mathbf{T}_2 = \begin{bmatrix} 1 & 1 \\ 0 & 1 \end{bmatrix}$, $\mathbf{T}_3 = \begin{bmatrix} 0 & 1 \\ -1 & 1 \end{bmatrix}$, $\mathbf{T}_4 = \begin{bmatrix} 1 & 0 \\ -1 & 1 \end{bmatrix}$, $\mathbf{T}_5 = \begin{bmatrix} 1 & 1 \\ -1 & 0 \end{bmatrix}$, and $\mathbf{T}_6 = \begin{bmatrix} 1 & 1 \\ -1 & 1 \end{bmatrix}$.

19. A signal detection method in a receiver in a MIMO mobile communication system, comprising the steps of:

   initially detecting a received signal using a modified decorrelating decision feedback, MDDF, method;
   detecting a channel response matrix using a vertical Bell Labs layered space time, V-VLAST, method, the channel response matrix being produced by the initial detection using the MDDF method, and updating a sphere radius and a parameter considering symbol combinations transmittable from a transmitter in the MIMO mobile communication system; and
   deciding, if one symbol combination lies within the sphere radius, after the update, the one symbol combination as a symbol combination transmitted by the transmitter.

20. A signal detection apparatus in a receiver in a MIMO mobile communication system, comprising:

   a detector for initially detecting a received signal using a modified decorrelating decision feedback, MDDF, method, detecting a channel response matrix using a vertical Bell Labs layered space time, V-VLAST, method, the channel response matrix being produced by the initial detection using the MDDF method, and updating a sphere radius and a parameter considering symbol combinations transmittable from a transmitter in the MIMO mobile communication system, and deciding, if one symbol combination lies within the sphere radius after the update, the one symbol combination as a symbol combination transmitted by the transmitter; and
   a demodulator for demodulating the decided symbol combination in a demodulation method corresponding to a modulation scheme used in the transmitter.

FIG.1

FIG.2

FIG.3

FIG.4

FIG.5

FIG.6

FIG.7

$(I_{1,1}^{I})^2$
$(I_{1,2}^{I})^2$
$(I_{1,3}^{I})^2$
$(I_{1,4}^{I})^2$

$(I_{1,1}^{Q})^2$
$(I_{1,2}^{Q})^2$
$(I_{1,3}^{Q})^2$
$(I_{1,4}^{Q})^2$

$(I_{N_t,1}^{Q})^2$
$(I_{N_t,2}^{Q})^2$
$(I_{N_t,3}^{Q})^2$
$(I_{N_t,4}^{Q})^2$

FIG.8

Real products

FIG.9

FIG.10

FIG.11

FIG.12

FIG.13

FIG.14

FIG.15

Subtree

Level 1

Visit the root
twice in the
subtree

Root of
subtree

Level M

Root node

FIG.16

FIG.17

FIG.18